# EUROPÄISCHE PATENTANMELDUNG

(11) **EP 1 940 015 A1**
(43) Veröffentlichungstag der Anmeldung: **02.07.2008**
(21) Anmeldenummer: 06026960.2
(22) Anmeldetag: 27.12.2006
(51) Int. Cl.: H02M 3/335, H02M 1/32

(54) **Schaltnetzteil mit einer aktiven Klemmschaltung**

(71) Anmelder: SIEMENS AKTIENGESELLSCHAFT, 80333 München (DE)
(72) Erfinder: Cyron, Michael, 76187 Karlsruhe (DE); Kort, Valentin, 76829 Landau (DE)

(57) **Zusammenfassung**

Ein Schaltnetzteil mit einem Transformator (1) mit einer auf einem Kern (2) angeordneten Primärwicklung (1a) und Sekundärwicklung (1b) sowie einem ersten Schaltglied (3) zum Schalten einer an die Primärwicklung (1a) angelegten Versorgungsspannung (Uᵥ), wobei mittels eines zweiten Schaltglieds (4) ein erster Kondensator (5) parallel zur Primärwicklung (1a) schaltbar ist, ist dadurch gekennzeichnet, dass auf dem Kern (2) eine Hilfswicklung (1c) angeordnet ist, in Abhängigkeit welcher das zweite Schaltglied (4) betätigbar ist.

## Beschreibung

Die Erfindung betrifft ein Schaltnetzteil nach dem Oberbegriff des Anspruchs 1, mit einem Transformator mit einer auf einem Kern angeordneten Primärwicklung und Sekundärwicklung sowie einem ersten Schaltglied zum Schalten einer an die Primärwicklung angelegten Versorgungsspannung, wobei mittels eines zweiten Schaltglieds ein erster Kondensator parallel zur Primärwicklung schaltbar ist.

Ein derartiges Schaltnetzteil ist im Stand der Technik hinlänglich bekannt und ist beispielsweise gemäß einer so genannten Flyback-Topologie oder Flusswandler-Topologie aufgebaut. In der Regel ist das erste Schaltglied ein Schalttransistor, der dazu dient, die Versorgungsspannung in hochfrequente Impulse zu zerhacken, um diese über den Transformator auf ein anderes Spannungsniveau zu wandeln. Da am Schalttransistor von außen eingespeiste oder intern aufgrund der physikalischen Eigenschaften der im Schaltnetzteil verwendeten Bauelemente, wie beispielsweise die parasitäre Streuinduktivität eines Übertragers, entstandene Spannungsspitzen auftreten können, muss der Schalttransistor gegen Spannungsspitzen zuverlässig geschützt sein.

Insbesondere entstehen in Schaltnetzteilen beim Sperren des Schalttransistors aufgrund der Streuinduktivität des Transformators Spannungsspitzen am Schalttransistor. Diese so genannten Spikes sind abhängig von der Streuinduktivität und tragen zu den Verlusten des Schaltnetzteils bei. Auch können die Spikes zu einer Überbelastung, im ungünstigsten Fall zur Zerstörung des Schalttransistors führen. Um dies zu vermeiden, müssen die Spikes bedämpft werden.

Zur Dämpfung dieser Spikes ist es bekannt, so genannte Snubber zu verwenden, welche aus einem Widerstand-Kondensator-Diode-Netzwerk bestehen. Der Kondensator und der Widerstand sind parallel angeordnet und über die Diode parallel zur Induktivität geschaltet. Bei der Verwendung derartiger Snubber entstehen jedoch zusätzliche Verluste, welche in Wärme umgesetzt werden. Diese Wärme muss über große Bauteile an die Umgebung abgeführt werden.

Es sind daher Snubber entwickelt worden, welche einen als integrierten Schaltkreis (IC) ausgebildeten Regler (Active Clamp) haben, mittels dem ein zweites Schaltglied steuerbar ist, mittels welchem ein Kondensator parallel zur Induktivität schaltbar ist. Beim Auftreten eines Spikes wird das zweite Schaltglied geschlossen, wodurch der Spike durch den Kondensator bedämpft wird. Die Kosten des Reglers sind jedoch relativ hoch, da der Regler sehr präzise arbeiten muss. Des Weiteren benötigt der Regler relativ viel Platz und erfordert eine komplexe Schaltungstechnik.

Es ist Aufgabe der Erfindung, ein eingangs genanntes Schaltnetzteil derart auszubilden, dass das erste Schaltglied auf einfache Weise und zuverlässig gegen Spannungsspitzen geschützt ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Schaltnetzteil mit einem Transformator mit einer auf einem Kern angeordneten Primärwicklung und Sekundärwicklung sowie einem ersten Schaltglied zum Schalten der an die Primärwicklung angelegten Versorgungsspannung, wobei mittels eines zweiten Schaltglieds ein erster Kondensator parallel zur Primärwicklung schaltbar ist, dadurch gekennzeichnet, dass auf dem Kern eine Hilfswicklung angeordnet ist, mittels welcher das zweite Schaltglied betätigbar ist.

Dadurch, dass auf dem Kern eine Hilfswicklung angeordnet ist, mittels der das zweite Schaltglied betätigbar ist, ist gewährleistet, dass der Schaltzeitpunkt des zweiten Schaltglieds in einer engen Beziehung zum Schaltzeitpunkt des ersten Schaltglieds steht; denn insbesondere, wenn die Hilfswicklung denselben Wickelsinn wie die Primärwicklung hat, lässt sich in der Hilfswicklung eine Spannung erzeugen, welche phasengleich mit der an der Primärwicklung anliegenden Spannung ist. Das heißt, eine beispielsweise beim Öffnen des ersten Schaltgliedes aufgrund der Streuinduktivität des Transformators in der Primärwicklung erzeugte Spannungsspitze ist entsprechend dem Windungsverhältnis der Sekundärwicklung zur Hilfswicklung zeitgleich auch in der Hilfswicklung vorhanden. Die in der Hilfswicklung erzeugte Spannungsspitze lässt sich in vorteilhafter Weise zur Steuerung des zweiten Schaltglieds verwenden.

Sehr einfach lässt sich die in der Hilfswicklung erzeugte Spannungsspitze zum Steuern des zweiten Schaltglieds verwenden, wenn das zweite Schaltglied ein Feldeffekttransistor ist, dessen Source-Gate-Strecke parallel zur Hilfswicklung liegt, wie dies bei einer besonderen Ausführungsform der Erfindung vorgesehen ist.

Dadurch, dass die Source-Gate-Strecke parallel zur Hilfswicklung liegt, ist der Feldeffekttransistor durchgeschaltet, wenn in der Hilfswicklung eine Spannung erzeugt wird. Das heißt, die Drain-Source-Strecke des Feldeffekttransistors kann niederohmig gesteuert werden, wenn ein Spike auftritt.

In vorteilhafter Weise ist das Gate des Feldeffekttransistors über einen zweiten Kondensator mit der Hilfswicklung verbunden, wobei parallel zur Source-Gate-Strecke ein Widerstand geschaltet ist. Der Widerstand und der zweite Kondensator sind so bemessen, dass der Feldeffekttransistor nur kurzzeitig durchgeschaltet ist, wobei die Durchschaltzeit des Feldeffekttransistors ausreichend ist, um den ersten Kondensator mit der im Spike enthaltenen Energie zu laden und auch wieder über die Primärinduktivität des Transformators zu entladen. Des Weiteren ist die Schließzeit des Feldeffekttransistors so gewählt, dass sie endet, bevor das erste Schaltglied wieder schließt.

Als sehr vorteilhaft hat sich eine Ausführungsform der Erfindung herausgestellt, bei der der Draht der Hilfswicklung einen Durchmesser von 0,05 bis 0,4 Millimeter, vorzugsweise 0,2 Millimeter hat. Mittels eines derartigen Drahtes lässt sich problemlos eine Hilfswicklung mit ausreichender Windungszahl auf dem Kern des Transformators anbringen. Insbesondere bei einem Drahtdurchmesser von etwa 0,2 Millimeter wird neben einer genügend großen Reißfestigkeit des Drahtes erreicht, dass die Hilfswicklung noch problemlos auf dem Kern des Transformators aufgebracht werden kann.

Der erfindungsgemäß ausgebildete Snubber arbeitet sehr verlustarm.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Figur 1: eine erste Ausführungsform eines erfindungsgemäßen Schaltnetzteils und
- Figur 2: eine zweite Ausführungsform eines erfindungsgemäßen Schaltnetzteils.

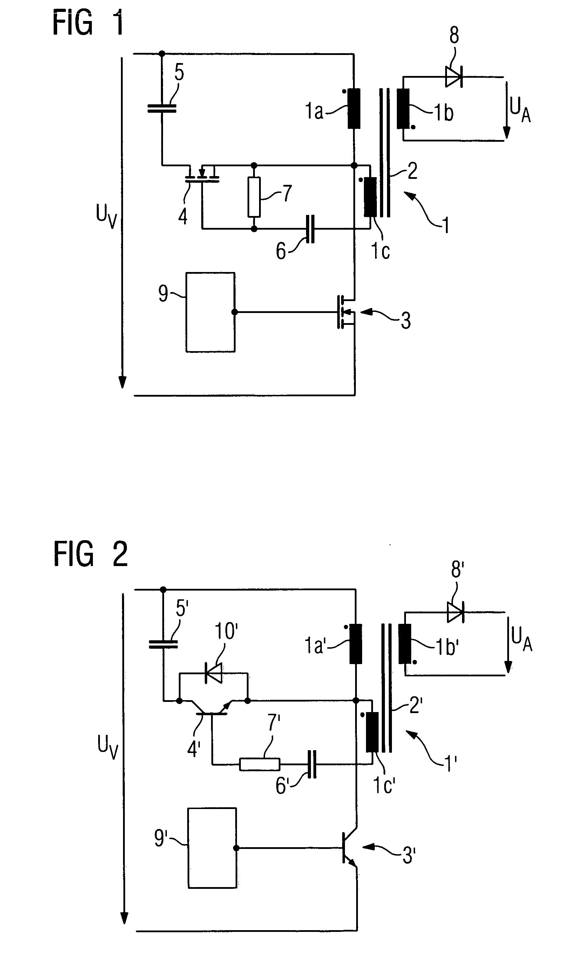

Wie Figur 1 entnommen werden kann, weist ein Schaltnetzteil, welches hier in der Flyback-Technologie aufgebaut ist, einen Transformator 1 auf, welcher einen Kern 2 aufweist, auf dem eine Primärwicklung 1a und eine Sekundärwicklung 1b angeordnet sind. Des Weiteren ist auf dem Kern 2 eine Hilfswicklung 1c angeordnet.

An die Primärwicklung 1a kann mittels eines Schalttransistors 3 eine Versorgungsspannung Uᵥ des Schaltnetzteils angelegt werden. Der Schalttransistor 3 wird von einer Steuerung 9 gesteuert. An der Sekundärwicklung 1b lässt sich über eine Diode 8 eine Ausgangsspannung U_{A} des Schaltnetzteils abnehmen. Der bisher beschriebene Aufbau entspricht bis auf die Hilfswicklung 1c dem Aufbau eines herkömmlichen Schaltnetzteils in Flyback-Technologie. Daher ist auch die Steuerung 9 auf herkömmliche Weise ausgebildet und steuert den Schalttransistor 3 auf herkömmliche Weise an.

Das Schaltnetzteil weist des Weiteren einen ersten Kondensator 5 auf, welcher über ein als Feldeffekttransistor (FET) ausgebildetes zweites Schaltglied 4 parallel zur Primärwicklung 1a schaltbar ist. Durch das zweite Schaltglied beziehungsweise den Feldeffekttransistor 4 und den ersten Kondensator 5 lassen sich aufgrund von Streuinduktivitäten in der Primärwicklung 1a erzeugte Spannungsspitzen (Spikes) in bekannter Weise dämpfen.

Durch die Hilfswicklung 1c ist es möglich, den Feldeffekttransistor 4 anzusteuern. Hierzu ist die Gate-Source-Strecke des Feldeffekttransistors 4 über einen zweiten Kondensator 6 parallel zur Hilfswicklung 1c geschaltet. Parallel zur Gate-Source-Strecke des Feldeffekttransistors 4 ist ein Widerstand 7 geschaltet, der mit dem zweiten Kondensator 6 ein RC-Glied bildet. Der zweite Kondensator 6 beziehungsweise das RC-Glied verhindert, dass der Feldeffekttransistor 4 durch die regulär in der Hilfswicklung 1c erzeugte Spannung ständig durchgeschaltet ist. Durch das RC-Glied wird erreicht, dass der Feldeffekttransistor 4 nur kurzzeitig durchgeschaltet ist. Das RC-Glied ist so dimensioniert, dass der Feldeffekttransistor 4 für maximal eine Mikrosekunde durchgeschaltet ist bei einer Taktfrequenz des Schalttransistors 3 von fünfhundert Kilohertz und einem Taktverhältnis von etwa 1:1.

Nachfolgend wird die Funktionsweise der erfindungsgemäßen Schaltung beschrieben. Während der Einschaltphase (Transistor leitet) des Schalttransistors 3 findet über die Primärwicklung 1a ein Energiefluss in den Transformator 1 statt. Wenn der Schalttransistor 3 aufgrund eines Signals der Steuerung 9 ausgeschaltet wird (Transistor leitet nicht), beginnt auf der Sekundärseite ein Strom über eine erste Diode 8 zu fließen. Dies ist die Funktionsweise des Flyback-Prinzips.

Der Stromfluss durch die Sekundärwicklung 1b erzeugt in der Hilfswicklung 1c eine Spannung. Die Größe der Spannung hängt von der Induktivität der Sekundärwicklung 1b zur Induktivität der Hilfswicklung 1c ab. Aufgrund des Wickelsinns der Hilfswicklung 1c ist das Potenzial an dem mit dem zweiten Kondensator 6 verbundenen Ende der Hilfswicklung 1c höher als an dem mit der Source des Feldeffekttransistors 4 verbundenen Ende. Hierdurch wird der Feldeffekttransistor 4 niederohmig, das heißt leitend, wodurch beim Ausschalten des Schalttransistors 3 in der Primärwicklung 1a entstehende Spikes verlustarm in den ersten Kondensator 5 geleitet werden. Nach Art eines aus dem ersten Kondensator 5 und der Primärwicklung 1a gebildeten Schwingkreises fließt in den ersten Kondensator 5 geflossene Energie anschließend wieder in die Primärwicklung 1a. Der erste Kondensator 5 nimmt somit die Energie aus der Streuinduktivität des Transformators 1 zunächst auf und gibt sie unmittelbar darauf folgend wieder an den Transformator 1 ab, welcher dann als Flusswandler arbeitet.

Da die Spikes nur bei der durch das Ausschalten des Schalttransistors 3 erzeugten steigenden Flanke der Spannung an der Primärwicklung 1a und kurz danach auftreten, wird das Gate des Feldeffekttransistors 4 über den Widerstand 7 entladen. Der Widerstand 7 muss groß genug gewählt werden, damit der erste Kondensator 5 seine Energie an die Primärwicklung 1a abgeben kann. Die Kapazität des zweiten Kondensators 6 muss so gewählt werden, dass die Zeitkonstante des aus dem Widerstand 7 und dem zweiten Kondensator 6 gebildeten RC-Gliedes so klein ist, dass der Feldeffekttransistor 4 wieder sperrt, bevor der Schalttransistor 3 wieder leitet.

Die in Figur 2 dargestellte Ausführungsform ist im Wesentlichen wie die in Figur 1 dargestellte Ausführungsform aufgebaut. Gleiche Bauelemente weisen daher dasselbe Bezugszeichen auf. Zur Unterscheidung sind diese jedoch mit einem Strich versehen.

Im Gegensatz zu der in Figur 1 dargestellten Ausführungsform wird der erste Kondensator 5' über einen Bipolartransistor 4' parallel zur Primärwicklung 1a' schaltbar. Der Bipolartransistor 4' ist als npn-Transistor ausgebildet. Parallel zur Emitter-Kollektor-Strecke des Transistors 4' ist eine zweite Diode 10' geschaltet, wobei die Anode der zweiten Diode 10' mit dem Emitter und die Kathode der zweiten Diode 10' mit dem Kollektor des Transistors 4' verbunden sind. Die Basis des Transistors 4' ist über ein aus einem Widerstand 7' und dem zweiten Kondensator 6' gebildetes RC-Glied mit der Hilfswicklung 1c' verbunden. Hierdurch schaltet der Transistor 4' durch, wenn das Potenzial an dem mit dem zweiten Kondensator 6' verbundenen Ende der Hilfswicklung 1c' höher ist als an dem mit dem Emitter des Transistors 4' verbundenen Ende. Dies ist der Fall, wenn beim Öffnen des Schalttransistors 3' in der Sekundärwicklung 1b' ein Stromfluss erzeugt wird, der seinerseits in der Hilfswicklung 1c' eine Spannung erzeugt.

Statt eines npn-Transistors kann auch ein pnp-Transistor verwendet werden, wobei dann der Kollektor des Transistors mit der Hilfswicklung verbunden sein muss und die Kathode der zweiten Diode 10' mit dem Emitter und die Anode der zweiten Diode 10' mit dem Kollektor des Transistors verbunden sein müssen. Des Weiteren muss dann auch der Wickelsinn der Hilfswicklung entgegengesetzt zum Wickelsinn der Primärwicklung sein.

## Patentansprüche

1. Schaltnetzteil mit einem Transformator (1; 1') mit einer auf einem Kern (2; 2') angeordneten Primärwicklung (1a; 1a') und Sekundärwicklung (1b; 1b') sowie einem ersten Schaltglied (3; 3') zum Schalten einer an die Primärwicklung (1a; 1a') angelegten Versorgungsspannung (Uᵥ), wobei mittels eines zweiten Schaltglieds (4; 4') ein erster Kondensator (5; 5') parallel zur Primärwicklung (1a; 1a') schaltbar ist, **dadurch gekennzeichnet, dass** auf dem Kern (2; 2') eine Hilfswicklung (1c; 1c') angeordnet ist, in Abhängigkeit welcher das zweite Schaltglied (4; 4') betätigbar ist.

2. Schaltnetzteil nach Anspruch 1, **dadurch gekennzeichnet, dass** das zweite Schaltglied (4) ein Feldeffekttransistor (FET) ist, dessen Source-Gate-Strecke parallel zur Hilfswicklung (1c) liegt.

3. Schaltnetzteil nach Anspruch 2, **dadurch gekennzeichnet, dass** das Gate des FET (4) über einen zweiten Kondensator (6) mit der Hilfswicklung (1c) verbunden ist.

4. Schaltnetzteil nach Anspruch 2 oder 3, **dadurch gekennzeichnet, dass** parallel zur Source-Gate-Strecke des FET (4) ein Widerstand (7) geschaltet ist.

5. Schaltnetzteil nach Anspruch 1, **dadurch gekennzeichnet, dass** das zweite Schaltglied (4') ein Bipolartransistor ist, dessen Basis-Kollektor-Strecke beziehungsweise Basis-Emitter-Strecke parallel zur Hilfswicklung (1c') liegt.

6. Schaltnetzteil nach Anspruch 5, **dadurch gekennzeichnet, dass** die Basis des Transistors über ein aus einem Widerstand (7') und einem zweiten Kondensator (6') gebildetes RC-Glied mit der Hilfswicklung (1c') verbunden ist.
